# EUROPEAN PATENT APPLICATION

(11) **EP 2 133 564 A2**
(43) Date of publication of application: **16.12.2009**
(21) Application number: 09161879.3
(22) Date of filing: 03.06.2009
(51) Int. Cl.: F03D 11/00, F03D 7/02

(54) **System for the monitoring of the wind incidence angle and the control of the wind turbine**

(30) Priority: 13.06.2008 US 139337
(71) Applicant: General Electric Company, Schenectady, NY 12345 (US)
(72) Inventor: Pierce, Kirk Gee, Simpsonville, SC 29681 (US); Herr, Stefan, Greenville, SC 29601 (US); Leclair, Ryan, Michael, Wilton, NY 12831 (US); Winslow, Christopher J., Schenectady, NY 12345 (US)
(74) Representative: Bedford, Grant Richard

(57) **Abstract**

A wind turbine (100) including a control system and at least one wind turbine blade (108) having a pressure measurement system (200) is disclosed. The pressure measurement system (200) includes a pressure probe (300) that provides a measurement of inflow angle to the control system. The control system adjusts the blade pitch angle of the at least one turbine blade (108) in response to the inflow angle measurement to improve energy capture. The pressure probe (300) is mounted by a probe support structure (302) at a predetermined position from the leading edge (201) of the at least one wind turbine blade (108).

## Description

The present invention relates generally to wind power energy production, and more particularly to a method and system for improving the energy production and control of wind plants by the use of blade inflow angle.

Recently, wind turbines have received increased attention as an environmentally safe and relatively inexpensive alternative energy source. With this growing interest, considerable efforts have been made to develop wind turbines that are reliable and efficient.

Generally, a wind turbine includes a plurality of blades coupled to a rotor through a hub. The rotor is mounted within a housing or nacelle, which is positioned on top of a tubular tower or base. Utility grade wind turbines (i.e. wind turbines designed to provide electrical power to a utility grid) can have large rotors (e.g., thirty or more meters in diameter). Blades on these rotors transform wind energy into a rotational torque or force that drives the rotor of one or more generators, rotationally coupled to the rotor. The rotor is supported by the tower through a bearing that includes a fixed portion coupled to a rotatable portion. The bearing is subject to a plurality of loads including the weight of the rotor, a moment load of the rotor that is cantilevered from the bearing, asymmetric loads, such as, horizontal and shears, yaw misalignment, and natural turbulence.

In addition, wind turbines have a controller, which adjusts the pitch angle of the blade to optimize energy capture below rated winds, and regulate power above rated winds. The controller may utilize a fixed fine pitch angle in the variable speed region and adjusts the pitch in above rated wind speed, depending on the power output and rotational speed of the turbine. The preset pitch angles that are input in to the controller for fine pitch control are based on 2D wind tunnel aerodynamic coefficients. In the field, wind turbine blades experience induction from the rotor as well as 3D flow field conditions with turbulence that is not accounted for in the prediction models. Field data has indicated that the actual aerodynamic and acoustical performance can be significantly different than current prediction models and 2D steady state wind tunnel data predict. By having an actual measurement of the inflow angle, which is correlated to the angle of attack, the turbine blade pitch is more efficiently controlled with increased energy conversion efficiency and avoiding blade stall. The acoustical performance may also be adjusted based on this measurement to allow a lower noise operation when desired.

Several research institutes in the wind turbine industry have attempted to characterize the inflow angle and angle of attack of wind turbine blades, however, none have developed a system that uses state of the art technology for pressure measurement that utilizes digital temperature compensation which eliminates the need for span calibration systems on the turbine. In addition, no other system uses a pressure measurement for closed loop control of the blade pitch angle for optimum performance, or uses the blade flow parameter.

Therefore, what is needed is a method and system for measuring the actual inflow angle correlated to the angle of attack to the blade.

One object of the present invention is to provide a wind turbine blade measurement system that measures the aerodynamic inflow angle that is correlated to the angle of attack, such that the blade pitch can be controlled at the optimum angle utilizing a closed loop control.

According to a first embodiment of the invention, a wind turbine control system is disclosed that includes a wind turbine blade having an airfoil. The airfoil includes a pressure side, a suction side, a leading edge, a trailing edge, and a length between a root edge and a tip. The wind turbine control system further includes a probe support structure attached to the wind turbine blade, a pressure probe attached to the probe support structure at a predetermined position from the leading edge, and a control system configured to receive sensor inputs from the pressure probe. The control system is configured to process the sensor inputs to control blade pitch of the wind turbine blade.

According to a second embodiment of the invention, a wind turbine is disclosed that includes a wind turbine blade having an airfoil, the airfoil comprising a pressure side, a suction side, a leading edge, a trailing edge, and a length between a root edge and a tip. The wind turbine further includes a probe support structure attached to the wind turbine blade, a pressure probe attached to the probe support structure at a predetermined position from the leading edge, and a control system configured to receive sensor inputs from the pressure probe. The control system is configured to process the sensor inputs to control blade pitch of the wind turbine blade.

According to a third embodiment of the invention, a method of controlling a wind turbine having at least one wind turbine blade is disclosed that includes measuring air pressure at a fixed position from the at least one wind turbine blade, and adjusting a pitch angle of the at least one wind turbine blade in response to the measured air pressure.

Further aspects of the method and system are disclosed herein. The features as discussed above, as well as other features and advantages of the present invention will be appreciated and understood by those skilled in the art from the following detailed description and drawings, in which:
FIG. 1 shows a side elevational view of a wind turbine according to an embodiment of the present disclosure.
FIG. 2 shows a top perspective view of a wind turbine blade according to an embodiment of the present disclosure.
FIG. 3 shows a cross sectional view of the wind turbine blade of FIG. 2 taken along line 3-3.

Wherever possible, the same reference numbers will be used throughout the drawings to refer to the same or like parts.

Various aspects and embodiments of the present invention now will be described more fully hereinafter with reference to the accompanying drawings, in which a preferred embodiment of the invention is shown. This invention may, however, be embodied in many different forms and should not be construed as limited to the embodiments set forth herein; rather, these embodiments are provided so that this disclosure will be thorough and complete and will fully convey the scope of the invention to those skilled in the art.

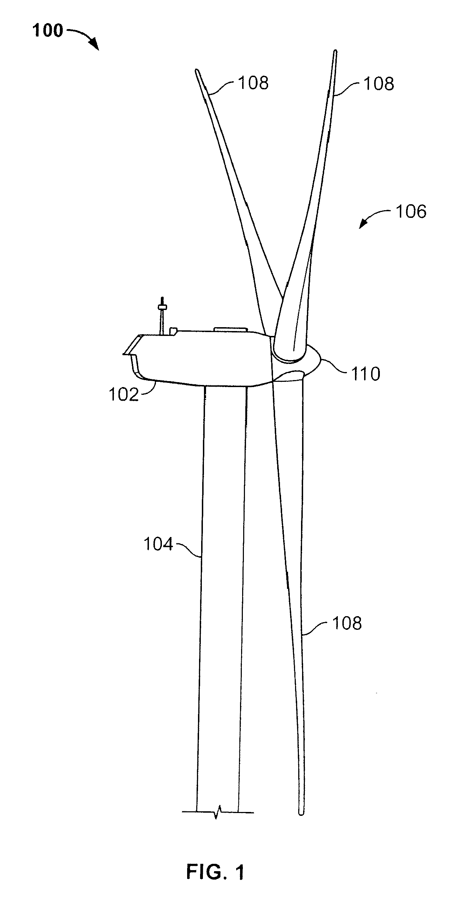

FIG. 1 shows a wind turbine 100 including a nacelle 102 and a rotor 110. Nacelle 102 is a housing mounted atop a tower 104, only a portion of which is shown in FIG. 1. The nacelle 102 includes a generator (not shown) disposed therewithin. In another embodiment, the generator may be located away from the nacelle 102, for example, in the tower 102 or in proximity to the wind turbine 100. The height of tower 104 is selected based upon factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or off-shore locations. The rotor 106 includes one or more turbine blades 108 attached to a rotating hub 110. In this exemplary embodiment, wind turbine 100 includes three turbine blades 108.

The wind turbine 100 includes a wind turbine control system (not shown) that adjusts wind turbine functions to control power production of the wind turbine 100. The wind turbine control system includes hardware and software configured to perform turbine functions as appreciated by one of ordinary skill in the art. The wind turbine functions include, but are not limited to regulation of blade rotational speed. The blade rotational speed may be controlled by adjusting parameters including the blade pitch and generator torque.

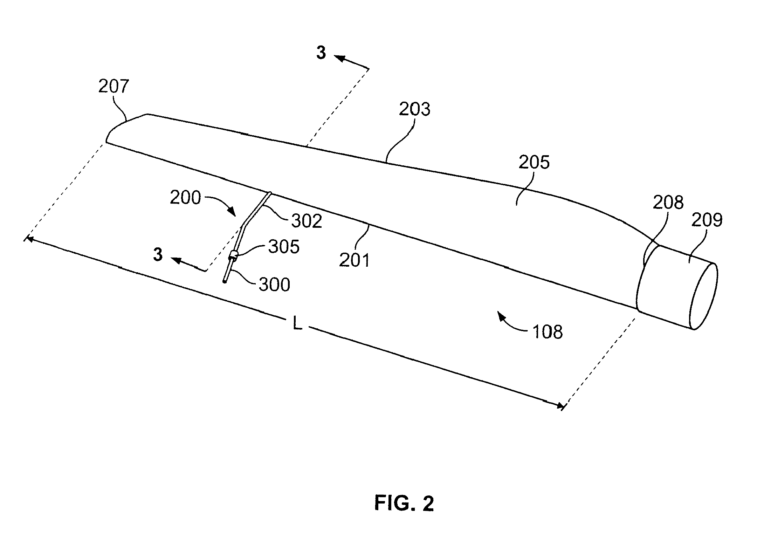

FIG. 2 illustrates an exemplary turbine blade 108 according to an embodiment of the present disclosure. The turbine blade 108 includes an airfoil portion 205 and a root portion 209. The airfoil portion 205 includes a leading edge 201, a trailing edge 203, a tip 207, a root edge 208, and a length L between the root edge and the tip. The root portion 209 is connectable to the hub 110 (FIG. 1) of the wind turbine 100 (FIG. 1).

As shown in FIG. 2, the turbine blade 108 further includes a pressure measurement system 200. The pressure measurement system 200 includes a probe support structure 302 and a pressure probe 300 attached by a coupling 305 thereto. The probe support structure 302 is configured to position the pressure probe 300 at a predetermined distance and position from the leading edge 201. The pressure probe 300 is mounted to an end of the probe support structure 302 with a substantially seamless and watertight connection provided by the coupling 305. In this exemplary embodiment, the pressure probe 300 is a 5-hole pressure probe. In another embodiment, the pressure probe 300 may be of any pressure probe configuration as would be appreciated by one of ordinary skill in the art.

The pressure measurement system 200 may be located at any position along the length L along the leading edge 201 of the airfoil portion 205. In one embodiment, the pressure measurement system 200 is positioned between approximately 60% and 80% of the length L from the root portion 209. In another embodiment, the pressure measurement system 200 is position between approximately 65% and 75% of the length L from the root portion. In yet another embodiment, the pressure measurement system 200 is positioned at approximately 75% of the length L from the root portion. In this exemplary embodiment, the turbine blade 108 includes one pressure measurement system 200. In another embodiment, the turbine blade 108 may include one or more pressure measurement systems 200 positioned along the leading edge 201 of the turbine blade 108.

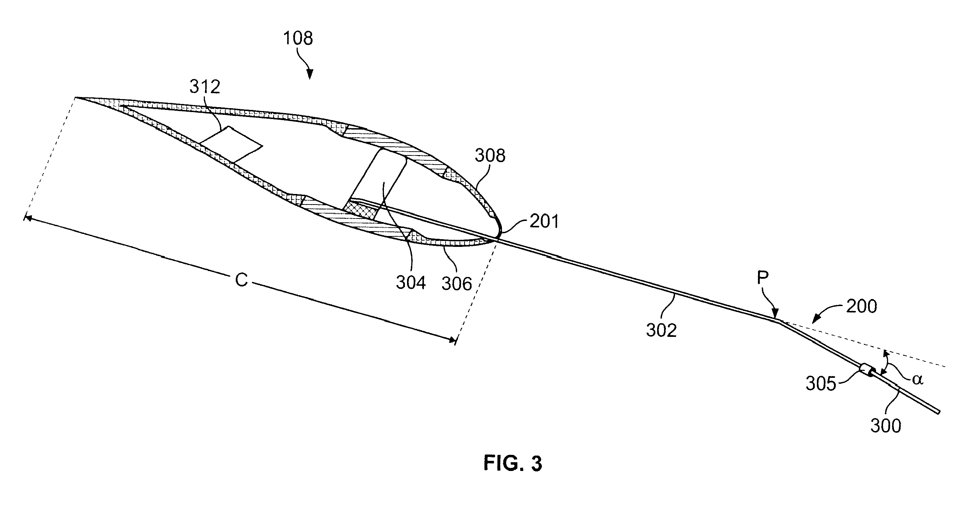

FIG. 3 illustrates a cross section view of the turbine blade 108 taken along line 3-3 of FIG. 2. The probe support structure 302 positions the pressure probe 300 at a sufficient distance from the leading edge 201 of the turbine blade 108 to allow measurement of airflow pressure where the airflow is relatively undisturbed by the turbine blade 108. The linear distance between the probe 300 and the leading edge of the blade 108 is approximately 80 percent to 140 percent the length of the chord C of the turbine blade 108, at the location where the support structure 302 enters the turbine blade 108. For example, for a turbine blade 108 having a chord C of approximately 1.0 m, the pressure probe 300 may be positioned approximately 1.3 m from the leading edge 201.

As further seen in FIG. 3, the wind turbine blade 108 includes a pressure side 306 and a suction side 308. In this exemplary embodiment, the probe support structure 302 is mounted on the pressure side 306 proximate to the leading edge 201. The probe support structure 302 is mounted through a substantially seamless connection (not shown), which minimizes flow distortion around the turbine blade 108. The substantially seamless connection should provide a substantially waterproof and watertight mounting. In another embodiment, the probe support structure 302 may be mounted at another position on the pressure side 306. In yet another embodiment, the support structure 302 may be mounted on the suction side 308 or on the leading edge 201. In another embodiment, the probe support may be mounted on the suction side proximate the leading edge 201.

As also seen in FIG. 3, the probe support structure 302 is attached or mounted to a shear web 304 contained within the wind turbine blade 108. The shear web 304 provides physical support to attachment of the probe support structure 302. In another embodiment, other structures (not shown) internal to the turbine blade 108 may be used to attach and support the probe support structure 302.

The probe support structure 302 extends from the blade 108 and bends at a bend angle α at a position P proximate to the pressure probe 300. The position P is sufficient to place the pressure probe 300 outside of interference from the support structure 302. For example, the position P may be approximately 35 to 80 cm from the pressure probe 300. In this exemplary embodiment, the bend angle α is approximately 10 degrees. In another embodiment, the bend angle α may be more or less than 10 degrees, as determined by the expected inflow angle at the desired measurement location. In yet another embodiment, the bend angle α may vary between 0-20 degrees. The bend angle α allows the probe 300 to obtain a more accurate inflow angle measurement. The inflow angle measurement range of the probe 300 is at least 0-20 degrees in any direction from the centerline of the probe 300.

The turbine blade 108 further includes a pressure scanner 312 having a high frequency response for receiving pressure inputs from the probe 300. The pressure scanner 312 is disposed within the turbine blade 108. The pressure scanner 312 is configured to receive pressure inputs from the pressure probe 300. In this exemplary embodiment, the probe support structure 302 includes fluid passages in fluid communication between the pressure probe 300 and the pressure scanner 312 for providing the pressure inputs from the pressure probe 300 to the pressure scanner 312. The pressure scanner 312 provides pressure inputs or indication of inflow angle to the wind turbine control system (not shown). In another embodiment, the pressure probe 300 may include transducers and/or other sensors and electronics to provide electrical pressure data directly to the wind turbine control system.

Referring to FIG. 1, the wind turbine 100 may include a compressed gas unit (not shown) configured to provide pressurized gas to the pressure probe 300 to clear and/or clean the pressure probe 300. The pressurized gas may be nitrogen, air or other gas. In one embodiment, the compressed gas unit may include a pressure vessel containing stored pressurized gas. In one embodiment, the pressure vessel may be disposed in the hub 110 or turbine blade 108. In another embodiment, the compressed gas unit may include a compressor (not shown) and/or storage tank (not shown) configured to provide the pressure probe 300 with pressurized gas. In one embodiment, the compressed gas unit may be provided with a control system (not shown) to clean and/or clear the pressure probe 300 periodically, in response to a sensed pressure probe condition, and/or via a manual input. The compressed gas unit would be configured to operate and provide compressed gas through lines and controls as would be appreciated by one of ordinary skill in the art.

The wind turbine 100 may further include a heating system (not shown) configured to ensure that the pressure probe 300 is substantially free of ice and/or snow. In one embodiment, the wind turbine 100 includes an ant-icing system configured to ensure the pressure probe 300 is substantially free of ice and/or snow during operation.

The wind turbine 100 may further include a lightning protection system (not shown). In one embodiment, the lightning protection system is configured to protect the pressure probe 300 and related components from damage from lightning strikes.

The wind turbine control system receives a measurement of inflow angle from the pressure probe 300 through the pressure scanner 312. The inflow angle, as well as other parameters and inputs, are used by the wind turbine control system to adjust the blade pitch to optimize energy capture and avoid stall conditions by the wind turbine 100. The turbine control system may use the measurement of the inflow angle to adjust blade pitch to a desired value to improve energy capture and avoid stall conditions. An iterative or adaptive method may be used in the adjustment of pitch based on inflow angle and measured power produced by the wind turbine 100. The measurement of inflow angle may also be used by the wind turbine control system to reduce the inflow angle at times of desired low noise operation.

The wind turbine control system may include additional probes and sensors (not shown). In another embodiment, the wind turbine control system may include a system of static pressure taps that are flush with the blade surface. The probes may be positioned along the turbine blade radially on the leading edge to produce an indication of the angle of attack. In yet another embodiment, the wind turbine control system may include a mechanical wind vane inflow angle measurement device.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended

Various aspects and embodiments of the present invention are now defined by the following numbered clauses:
1. A wind turbine control system, comprising:
   a wind turbine blade comprising an airfoil, the airfoil comprising a pressure side, a suction side, a leading edge, a trailing edge, and a length between a root edge and a tip;
   a probe support structure attached to the wind turbine blade;
   a pressure probe attached to the probe support structure at a predetermined position from the leading edge;
   a control system configured to receive sensor inputs from the pressure probe;
   wherein the control system is configured to process the sensor inputs to control blade pitch of the wind turbine blade.
2. The system of clause 1, further comprising a pressure scanner configured to receive sensor inputs from the pressure probe and provide pressure data to the control system.
3. The system of any preceding clause, wherein the probe support structure is mounted on the pressure side proximate the leading edge.
4. The system of any preceding clause, wherein the probe support structure is mounted between about 65% and 75% the airfoil length from the root edge.
5. The system of any preceding clause, wherein the probe support has a length of approximately 80% to 140% of a chord length of the wind turbine airfoil measured from the leading edge to the trailing edge at the position where the probe support structure is mounted to the wind turbine blade.
6. The system of any preceding clause, further comprising a compressed gas unit configured to provide cleaning to the pressure probe.
7. The system of any preceding clause, further comprising a heating unit configured to substantially prevent ice accumulation on the pressure probe.
8. The system of any preceding clause, further comprising a lightning protecting system configured to protect the pressure probe from lightning strikes.
9. The system of any preceding clause, wherein the probe support structure is mounted to a shear web in the wind turbine blade.
10. A wind turbine, comprising:
   a wind turbine blade comprising an airfoil, the airfoil comprising a pressure side, a suction side, a leading edge, a trailing edge, and a length between a root edge and a tip;
   a probe support structure attached to the wind turbine blade;
   a pressure probe attached to the probe support structure at a predetermined position from the leading edge; and
   a control system configured to receive sensor inputs from the pressure probe;
   wherein the control system is configured to process the sensor inputs to control blade pitch of the wind turbine blade.
11. The wind turbine of clause 10, wherein the probe support structure is mounted on the pressure side proximate to the leading edge of the wind turbine blade.
12. The wind of clause 10 or 11, wherein the probe support structure is mounted between about 65% and 75% the airfoil length from the root edge.
13. The wind of any of clauses 10 to 12, wherein the probe support has a length of approximately 80% to 140% of a chord length of the wind turbine airfoil measured from the leading edge to the trailing edge at the position where the probe support is mounted to the wind turbine blade.
14. The wind turbine of any of clauses 10 to 13, further comprising a pressure scanner configured to receive sensor inputs from the pressure probe and provide pressure data to the control system.
15. The wind turbine of any of clauses 10 to 14, further comprising a compressed gas unit configured to provide cleaning to the pressure probe.
16. The wind turbine of any of clauses 10 to 15, further comprising a heating unit configured to substantially prevent ice accumulation on the pressure probe.
17. The wind of any of clauses 10 to 16, further comprising a lightning protecting system configured to protect the pressure probe from lightning strikes.
18. The wind turbine of any of clauses 10 to 17, wherein the probe support structure is mounted to a shear web in the wind turbine blade.
19. A method of controlling a wind turbine having at least one wind turbine blade, comprising:
   measuring air pressure at a fixed position from the at least one wind turbine blade; and
   adjusting a pitch angle of the at least one wind turbine blade in response to the measured air pressure.
20. The method of clause 19, wherein the air pressure is measured by a pressure probe attached to a probe support structure mounted proximate a leading edge of the at least one wind turbine blade.

## Claims

1. A wind turbine control system, comprising:
a wind turbine blade (108) comprising an airfoil (205), the airfoil comprising a pressure side (306), a suction side (308), a leading edge (201), a trailing edge (203), and a length between a root edge (208) and a tip (207);
a probe support structure (302) attached to the wind turbine blade (108);
a pressure probe (300) attached to the probe support structure (302) at a predetermined position from the leading edge (201);
a control system configured to receive sensor inputs from the pressure probe (300);
wherein the control system is configured to process the sensor inputs to control blade pitch of the wind turbine blade (108).

2. The system of claim 1, further comprising a pressure scanner configured to receive sensor inputs from the pressure probe (300) and provide pressure data to the control system.

3. The system of any preceding claim, wherein the probe support structure (302) is mounted on the pressure side proximate the leading edge (201).

4. The system of any preceding claim, wherein the probe support structure (302) is mounted between about 65% and 75% the airfoil length from the root edge (208).

5. The system of any preceding claim, wherein the probe support structure (302) has a length of approximately 80% to 140% of a chord length of the wind turbine airfoil (108) measured from the leading edge (201) to the trailing edge (203) at the position where the probe support structure (300) is mounted to the wind turbine blade (108).

6. The system of any preceding claim, further comprising a compressed gas unit configured to provide cleaning to the pressure probe (300).

7. The system of any preceding claim, further comprising a heating unit configured to substantially prevent ice accumulation on the pressure probe (300).

8. The system of any preceding claim, further comprising a lightning protecting system configured to protect the pressure probe (300) from lightning strikes.

9. The system of any preceding claim, wherein the probe support structure (300) is mounted to a shear web in the wind turbine blade (108).

10. The system of any preceding claim, further comprising:
a compressed gas unit configured to provide cleaning to the pressure probe (300);
a heating unit configured to substantially prevent ice accumulation on the pressure probe (300); and
a lightning protecting system configured to protect the pressure probe (300) from lightning strikes.
